# FASCICULE DE BREVET EUROPEEN

(11) **EP 0 876 966 B1**
(45) Date de publication et mention de la délivrance du brevet: **05.02.2003**
(21) Numéro de dépôt: 98401051.2
(22) Date de dépôt: 30.04.1998
(51) Int. Cl.: B65D 77/20, A01K 5/015

(54) **Conditionnement perfectionné pour produit d'alimentation animale sous forme de bloc à lécher**
Verpackung für Futter in Form eines Lecksteins
Package for fodder in the form of licking stone

(30) Priorité: 05.05.1997 FR 9705487
(43) Date de publication de la demande: 11.11.1998
(73) Titulaire: Nutrilac, 62180 Verton (FR)
(72) Inventeur: Bach, Gérard, 57530 Laquenexy (FR)
(74) Mandataire: Hud, Robert

(56) Documents cités:
- FR-A- 2 351 880
- FR-A- 2 608 892
- US-A- 5 520 306
- US-A- 5 613 617

## Description

L'invention concerne un conditionnement pour un produit d'alimentation animale, plus particulièrement pour un tel produit se présentant sous la forme d'un bloc à lécher.

Il est connu d'utiliser, pour l'alimentation animale, des aliments complémentaires permettant, par l'apport de minéraux et d'additifs (oligo-éléments et vitamines), de compléter une ration de base.

Il est aussi connu de conditionner ces blocs à lécher dans des seaux à veau, qui ont non seulement un rôle d'emballage, mais servent aussi de moyen de distribution, aux animaux, du bloc à lécher en libre service. A cet effet les seaux à veau utilisés, qui sont réalisés en polyéthylène ou en polypropylène, présentent une forme conique évasée vers le haut, qui est adaptée pour permettre l'accès des animaux (voir par ex. FR 2 608 892 A).

Lors de la commercialisation des blocs à lécher, ces récipients connus qui les contiennent sont fournis non fermés, en France conformément aux dispositions de l'arrêté du Ministère de l'Agriculture du 16 mars 1989 (article 6, alinéa d).

La présente invention a pour objet d'améliorer la constitution des récipients connus utilisés pour la commercialisation des blocs à lécher et elle propose à cet effet un seau à veau conçu pour assurer une qualité optimale du produit qu'il contient, grâce à une conservation maîtrisée de ses composantes et plus particulièrement de ses vitamines et à une fraîcheur préservée, en renforçant ainsi l'efficacité et l'appétence de ces produits.

A cet effet l'invention propose, en allant à l'encontre de la pratique connue, autorisée par la législation en vigueur, de conditionnement non fermé des blocs ou pierres à lécher et malgré les difficultés posées par les dimensions en hauteur et en surface des seaux à veau, d'adjoindre au dit récipient un opercule qui assure sa fermeture hermétique.

Outre le fait que l'opercule utilisé protège le produit en évitant le dépôt de poussière et préserve donc la qualité hygiénique du produit pendant le stockage, la société déposante a en effet découvert que, pour des blocs à lécher du type "coulé/moulé", dont la dureté est obtenue par une réaction acide/base des ingrédients qui passent d'un état de pâte à l'état solide, une fermeture par opercule selon la présente invention présente de nombreux avantages.

Le contact du produit avec l'air et son hygrométrie, et les inconvénients qui en découlent, se trouvent ainsi évités. En effet, en conditionnement ouvert, le bloc à lécher au contact de l'air humide capte l'humidité de l'air et se charge en eau. De ce fait l'humidité intrinsèque du bloc remonte en surface où se forme une pellicule d'eau. Cette eau, chargée d'oligo-éléments, de mélasse et de minéraux est d'aspect noirâtre, ce qui rend alors peu présentable le bloc à lécher.

Au contraire, au contact de l'air très sec, le bloc à lécher se dessèche en devenant alors très dur et en étant de ce fait moins bien consommé par les animaux. Ce phénomène altère la présentation du bloc à lécher et en diminue considérablement l'appétence.

L'utilisation d'un opercule selon l'invention permet donc de préserver la fraîcheur du bloc à lécher, tout en améliorant sa présentation et son appétence. Il permettra également de mieux conserver les minéraux et d'augmenter le délai de garantie des minéraux (macro et micro-éléments). Ce délai de garantie pourra passer de 12 à 18 mois pour les minéraux et les oligo-éléments.

L'utilisation d'un opercule améliore le processus de fabrication du produit, car la prise en masse du produit s'effectue de façon plus rapide et elle est ensuite constante dans le temps. En effet, alors qu'un bloc à lécher dans un conditionnement ouvert (technique actuelle) met de 4 à 15 jours pour prendre en masse, la société déposante a pu constater qu'avec un seau operculé selon l'invention ce délai se trouve réduit de moitié, en permettant ainsi une livraison plus rapide d'un produit conforme (c'est-à-dire de dureté correcte).

L'invention permet aussi une meilleure conservation des additifs, et particulièrement des vitamines, contenus dans le produit. En effet, dans un emballage ouvert, le bloc à lécher ressuye et capte l'humitidé ambiante en fonction des conditions climatiques. Il existe donc des phénomènes de migration d'eau libre, qui constitue le premier facteur d'altération des composants, et plus particulièrement des vitamines, incorporés dans le produit. Grâce à l'operculage selon l'invention, les vitamines se trouvent alors mieux conservées, et le délai de garantie des vitamines peut être augmenté. Des essais effectués à cet effet par la société déposante ont ainsi permis de constater que l'operculage permet de passer de 6 mois à 9 mois de garantie pour les teneurs en vitamines.

Pour bien faire comprendre l'invention on en décrira ci-après, à titre d'exemple sans caractère limitatif, une forme de réalisation préférée en référence au dessin schématique annexé dans lequel :
la figure 1 est une vue en coupe verticale d'un seau à veau selon l'invention destiné à contenir un bloc à lécher ; et

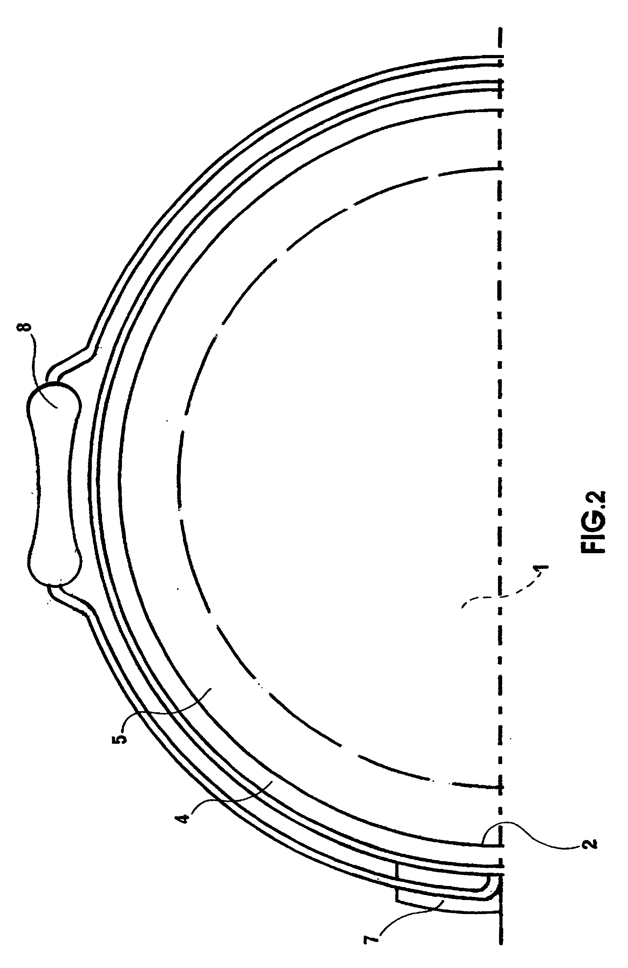

la figure 2 est une vue partielle en plan du seau de la figure 1.

En référence au dessin, le seau à veau réalisé en matière synthétique, par exemple en polyéthylène haute densité, présente un fond horizontal 1 se poursuivant par une paroi périphérique tronconique 2 telle que l'ouverture supérieure 3 du seau soit d'un diamètre supérieur à celui du fond 1.

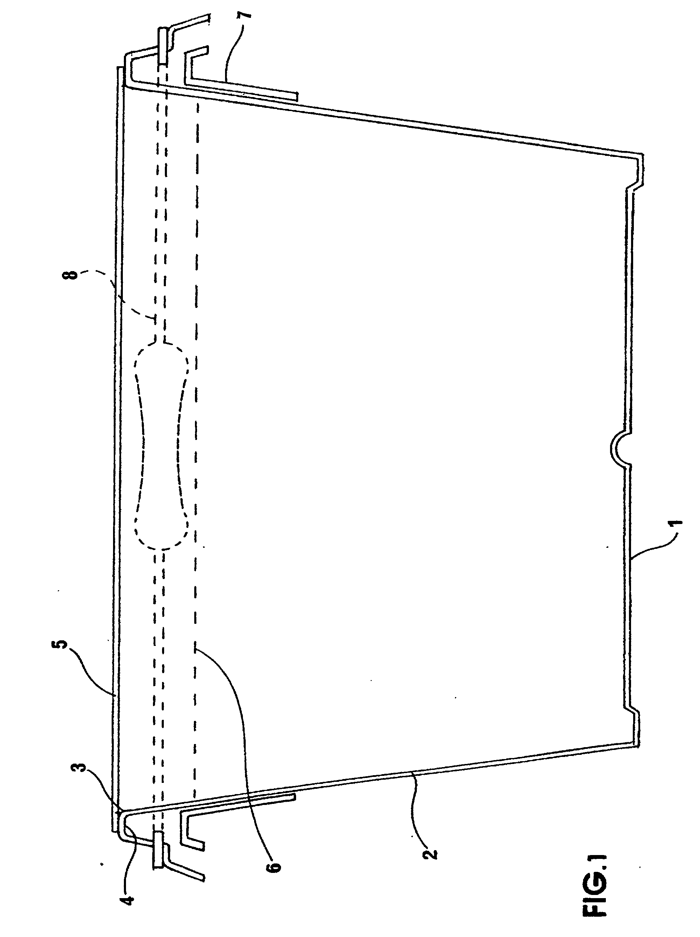

L'extrémité supérieure de la paroi 3 est repliée vers l'extérieur, en ménageant une partie annulaire horizontale périphérique 4 sur laquelle est thermosoudé un opercule 5 également en polyéthylène. A la figure 1, on a schématisé en pointillé en 6 un bloc à lécher emballé dans le dit seau.

La fermeture hermétique réalisée par l'opercule 5 permet de préserver la fraîcheur du bloc à lécher 6, en améliorant sa présentation et son appétence, autorise une meilleure maîtrise de la prise en masse du bloc à lécher et de sa constance dans le temps, et permet une meilleure conservation des composants et particulièrement des vitamines.

Avantageusement, la robustesse de l'opercule 5 permet, sans risque de dommages, le gerbage des seaux remplis et operculés.

Pour faciliter la manutention du seau, on a représenté en 7 des poignées latérales soudées à la paroi 2 du seau, et en 8 une anse métallique fixée à ses extrémités à la paroi 3.

On comprendra que la description ci-dessus a été donnée à simple titre d'exemple, sans caractère limitatif, et que des adjonctions ou des modifications constructives pourraient y être apportées dans le cadre des revendications.

## Revendications

1. Seau à veau pour le conditionnement d'un produit d'alimentation animale tel q'un bloc à lécher, réalisé en matière synthétique et présentant un fond (1) se poursuivant par une paroi périphérique (2), évasée vers le haut, **caractérisé en ce que** le seau rempli du produit (6) à conditionner est fermé par un opercule (5) en matière synthétique fixé au bord périphérique supérieur de la dite paroi (2).

2. Seau à veau selon la revendication 1, **caractérisé en ce que** la paroi (2) du seau présente à son extrémité supérieure une partie périphérique sensiblement horizontale (4) sur laquelle vient se fixer le dit opercule (5).

3. Seau à veau selon la revendication 1 ou la revendication 2, **caractérisé en ce que** la fixation de l'opercule (5) à la paroi (3) du seau est réalisée par thermosoudage.

## Patentansprüche

1. Eimer für Kälber zur Verpackung eines Tiernahrungsmittels, wie beispielsweise eines Lecksteins, hergestellt aus einem Kunststoff und umfassend einen Boden (1), der durch eine Umfangswand (2), die nach oben hin erweitert ist, fortgesetzt ist, **dadurch gekennzeichnet, daß** der mit dem zu verpackenden Produkt (6) gefüllte Eimer mit einem Kunststoffdeckel (5) verschlossen ist, der am oberen Umfangsrand der Wand (2) befestigt ist.

2. Eimer für Kälber nach Anspruch 1, **dadurch gekennzeichnet, daß** die Wand (2) des Eimers an ihrem oberen Ende einen im wesentlichen horizontalen Umfangsteil (4) aufweist, auf dem der Deckel (5) befestigt ist.

3. Eimer für Kälber nach Anspruch 1 oder Anspruch 2, **dadurch gekennzeichnet, daß** die Befestigung des Deckels (5) an der Wand (3) des Eimers durch Warmschweißen durchgeführt ist.

## Claims

1. Calf bucket for storing a product for feeding livestock, such as a licking block, which is produced from a synthetic material and which has a base (1) from which extends a peripheral wall (2) which tapers outwardly towards the top, **characterised in that** the bucket filled with the product (6) to be stored is closed by a cover (5) of a synthetic material fixed to the upper peripheral rim of the wall (2).

2. Calf bucket according to claim 1, **characterised in that** the wall (2) of the bucket has at its upper end a substantially horizontal peripheral portion (4), to which is fixed the cover (5).

3. Calf bucket according to claim 1 or claim 2, **characterised in that** the fixing of the cover (5) to the wall (3) of the bucket is carried out by heat-welding.
